Europäisches Patentamt

European Patent Office

Office européen des brevets

(19)

(11) Veröffentlichungsnummer: **0 027 163**
**B1**

(12)

# EUROPÄISCHE PATENTSCHRIFT

(45) Veröffentlichungstag der Patentschrift:
15.02.84

(51) Int. Cl.³: **F 16 F 9/18, B 60 G 13/08**

(21) Anmeldenummer: 80104384.5

(22) Anmeldetag: 25.07.80

(54) Ölgefüllter Zweirohr-Teleskopschwingungsdämpfer.

(30) Priorität: 10.10.79 DE 2941036

(43) Veröffentlichungstag der Anmeldung:
22.04.81 Patentblatt 81/16

(45) Bekanntmachung des Hinweises auf die Patenterteilung:
15.02.84 Patentblatt 84/7

(84) Benannte Vertragsstaaten:
FR GB IT

(56) Entgegenhaltungen:
EP - A - 0 023 967
DE - A - 2 144 795
DE - B - 1 505 280
GB - A - 2 004 348
US - A - 3 882 977

(73) Patentinhaber: Boge GmbH, Bogestrasse 50,
D-5208 Eitorf/Sieg (DE)

(72) Erfinder: Schmidt, Rudolf, Ulmenweg 9, D-5208 Eitorf
(Sieg) (DE)

## Ölgefüllter Zweirohr-Teleskopschwingungsdämpfer

Die Erfindung bezieht sich auf einen ölgefüllten Zweirohr-Teleskopschwingungsdämpfer, insbesondere für Kraftfahrzeuge, bei welchem ein an einer Kolbenstange befestigter ventilbestückter Kolben einen Arbeitszylinder in zwei Arbeitsräume unterteilt, welche über ein im Boden des Arbeitszylinders angeordnetes Bodenventil bzw. über Durchlässe im Bereich eines Deckels mit einem koaxial um den Arbeitszylinder angeordneten Ausgleichsraum in Verbindung stehen, der nach aussen durch ein Mantelrohr mit einem Boden begrenzt ist, wobei der Arbeitszylinder bodenseitig im Bereich des Bodens des Mantelrohrs abgestützt ist, und wobei der Arbeitszylinder deckelseitig axial verschieblich und abgedichtet angeordnet ist derart, dass unterschiedliche Ausdehnungen von Arbeitszylinder und Mantelrohr möglich sind.

Bei den bekannten ölgefüllten Zweirohr-Teleskopschwingungsdämpfern der vorstehend beschriebenen Gattung (z.B. GB-A-2 004 348, DE-B-1 505 280, DE-A-2 144 795) sind der das Bodenventil erhaltende Boden des Arbeitszylinders, der Arbeitszylinder selbst sowie der Deckel Teile einer unter Axialdruck stehenden Verspannungskette, wobei der Axialdruck durch Erzeugung von Zugspannungen im Mantelrohr mittels Umbördelung oder Verschraubungen dieses gegen den Deckel erzeugt wird und wobei sich die unter Axialdruck stehenden Teile gegen den Boden des Mantelrohrs abstützen.

Bekanntlich werden aus Gründen der Energieeinsparung weltweite Anstrengungen unternommen, das Eigengewicht der Kraftfahrzeuge zu reduzieren, wovon zwangsläufig auch die Schwingungsdämpfer betroffen sind. Aus Funktionsgründen ist es bei Realisierung dieser Bemühungen jedoch unumgänglich, dass man am Schwingungsdämpfer Schwerbaustoffe (insbesondere für den Arbeitszylinder) mit Leichtbaustoffen (für andere Teile) paart. Dabei ist es jedoch von Nachteil, dass bei Temperaturschwankungen infolge der unterschiedlichen Wärmeausdehnungskoeffizienten der verschiedenen Baustoffe die oben beschriebene axiale Verspannungskette verloren geht, was zu Funktionsstörungen des Schwingungsdämpfers führt.

Ein Ausführungsbeispiel (Fig. 8) der GB-A-2 004 348 gewährleistet zwar eine axiale Verschieblichkeit des Arbeitszylinders durch die mit axialem Spiel ausgestattete Schnappverbindung, jedoch ist dieses Spiel zum Zwecke des Toleranzausgleiches vorgesehen. Es lassen sich lediglich geringfügige Ausdehnungen auffangen. Nachteilig ist, dass solche begrenzte Ausdehnungsmöglichkeit nur bei gleichen Materialien anwendbar ist und wo mit geringen Temperaturdifferenzen gerechnet werden kann.

Der vorliegenden Erfindung liegt die Aufgabe zugrunde, einen einfachen und wirksamen ölgefüllten Zweirohr-Teleskopschwingungsdämpfer der eingangs erwähnten Gattung zu schaffen, welcher die Nachteile der bekannten Schwingungsdämpfer vermeidet und welcher insbesondere eine problemlose Paarung von Schwerbaustoffen mit Leichtbaustoffen zulässt.

Diese Aufgabe wird erfindungsgemäss dadurch gelöst, dass der Arbeitszylinder bodenseitig mit dem Mantelrohr im Bereich von dessen Boden fest verbunden ist und deckelseitig gegenüber dem Mantelrohr mittels eines radialwirkenden Spannringes kraftschlüssig fixiert ist, der zwischen Arbeitszylinder und Mantelrohr angeordnet ist und welchem innerhalb des Ausgleichsraums eine Abdichteinrichtung zugeordnet ist.

Die Erfindung löst die gestellte Aufgabe mit besonders einfachen Mitteln durch eine axial spannungsfreie Anordnung des Arbeitszylinders innerhalb des Mantelrohrs. Hierbei ist der Arbeitszylinder derart im Mantelrohr gelagert, dass er nur an einem Ende an diesem axial befestigt ist. An seinem gegenüberliegenden Ende ist der Arbeitszylinder lediglich radial innerhalb des Mantelrohrs fixiert. Bestehen nun das Mantelrohr einerseits und der Arbeitszylinder andererseits aus Baustoffen mit unterschiedlichen Wärmeausdehnungskoeffizienten, so ermöglicht die erfindungsgemässe Anordnung entsprechend unterschiedliche Wärmedehnungen von Arbeitszylinder bzw. Mantelrohr, wobei die Funktion des Schwingungsdämpfers keinesfalls beeinträchtigt wird. Die an dem lediglich radial kraftschlüssig fixierten Ende des Arbeitszylinders vorgesehene Abdichteinrichtung stellt an diesem Ende eine Abdichtung des Ausgleichsraums nach aussen sicher.

Gemäss einer besonders bevorzugten Ausführungsform der Erfindung dient eine Bodenventilschraube gleichzeitig zum bodenseitigen Befestigen des Arbeitszylinders am Boden des Mantelrohrs. Hierdurch wird eine besondere Befestigungsschraube oder dergleichen für den Arbeitszylinder eingespart.

Mit Vorteil ist dabei der Boden des Arbeitszylinders mit axialem Abstand vom Boden des Mantelrohrs angeordnet, und die axiale Abstützung zwischen Arbeitszylinder und Mantelrohr erfolgt über die äussere Stirnfläche der Bodenventilschraube. Gemäss einer anderen ebenfalls vorteilhaften Ausbildung der Erfindung kann jedoch auch der Boden des Arbeitszylinders unter Zwischenschaltung einer Scheibe am Durchströmungskanäle zum Ausgleichsraum aufweisenden Boden des Mantelrohrs angeordnet sein. In beiden Fällen ergibt sich eine einfache und ausreichend feste Abstützung und Fixierung des Arbeitszylinders im Bodenbereich des Mantelrohrs.

Vorteilhafterweise erfolgt die radiale kraftschlüssige Fixierung des Arbeitszylinders innerhalb des Mantelrohres mittels eines, vorzugsweise innenspannenden, Ringes, welcher mit Presssitz im Mantelrohr angeordnet ist. Hierdurch ergibt sich mit einfachen Mitteln eine sichere radiale Fixierung bei gleichzeitiger axialer Verschieblichkeit des Arbeitszylinders innerhalb des Mantelrohrs.

Mit Vorteil ist die Abdichteinrichtung durch einen Gummiring oder dergleichen gebildet, welcher zwischen dem, vorzugsweise innenspannenden, Ring und einer bezüglich dieses in Richtung auf den Boden des Arbeitszylinders befindlichen Scheibe angeordnet ist. Eine derartige Abdichteinrichtung ergibt bei besonders einfachem Aufbau eine ausreichende und sichere Abdichtung des Ausgleichsraums nach aussen.

Zur Erhöhung der Sicherheit kann der innenspannende Ring gemäss einem weiteren Erfindungsmerkmal zusätzlich durch einen Sprengring fixiert sein.

Die Erfindung ermöglicht es, dass unter Beibehaltung von Stahl als Baustoff insbesondere für den Arbeitszylinder demgegenüber das Mantelrohr gemäss einem weiteren Erfindungsmerkmal aus einem Leichtbaustoff, insbesondere Kunststoff oder Aluminium-Legierung, bestehen kann, wobei im Boden des Mantelrohrs gegebenenfalls ein metallisches Befestigungsauge zur Aufnahme der Bodenventilschraube vorgesehen ist.

Die Erfindung wird nachstehend anhand von in der Zeichnung schematisch dargestellten Ausführungsbeispielen näher erläutert. Es zeigen:

Fig. 1 einen axialen Längsschnitt eines ölgefüllte Zweirohr-Teleskopschwingungsdämpfers gemäss einer ersten Ausführungsform der Erfindung,

Fig. 2 einen teilweisen axialen Längsschnitt durch den Bodenbereich einer zweiten Ausführungsform des erfindungsgemässen Schwingungsdämpfers,

Fig. 3 im Detail eine gegenüber Fig. 1 abgewandelte Ausbildung der deckelseitigen radialen Fixierung nebst Abdichtung zwischen Arbeitszylinder und Mantelrohr und

Fig. 4 im Detail eine nochmals weitere Abwandlung der deckelseitigen radialen Fixierung nebst Abdichteinrichtung zwischen Arbeitszylinder und Mantelrohr.

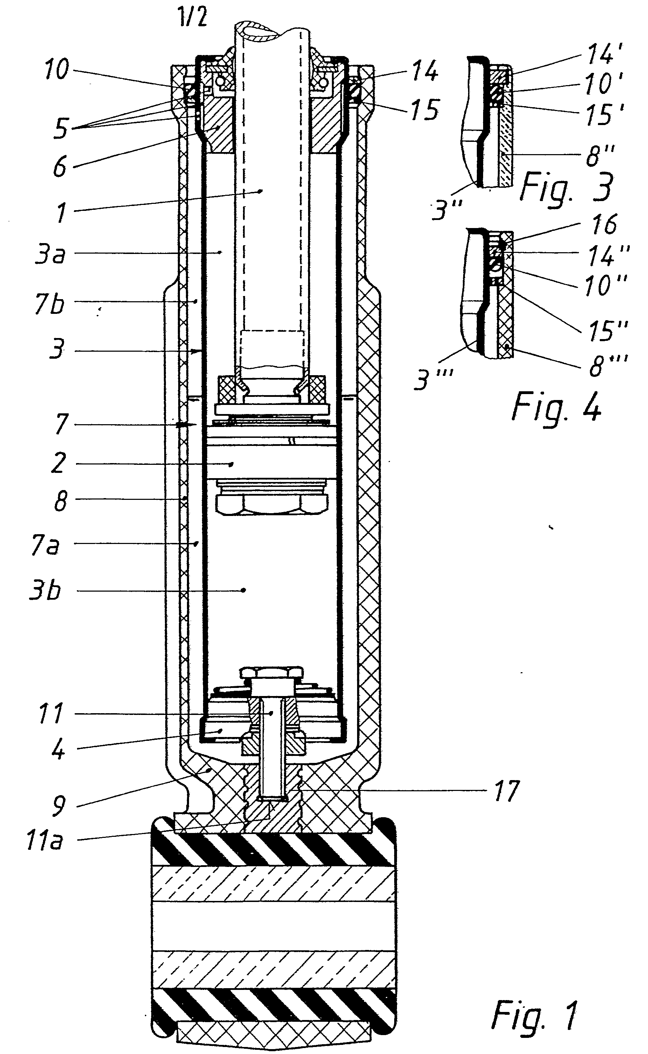

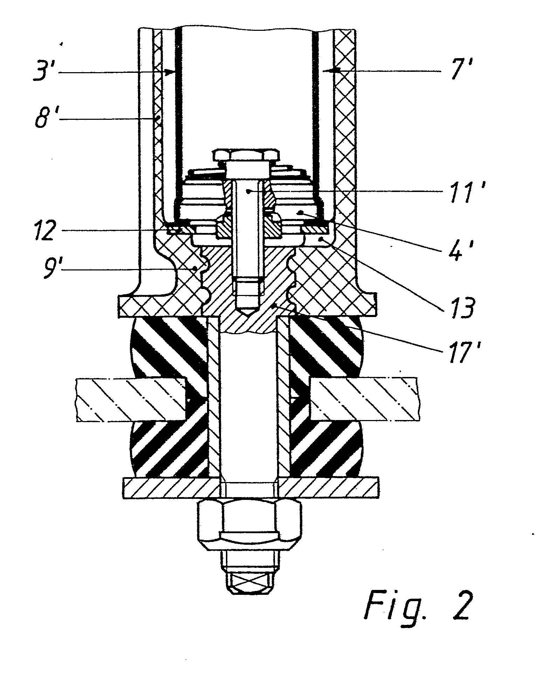

Fig 1 zeigt einen ölgefüllten Zweirohr-Teleskopschwingungsdämpfer für Kraftfahrzeuge, bei welchem ein an einer Kolbenstange 1 befestigter ventilbestückter Kolben 2 einen Arbeitszylinder 3 in zwei Arbeitsräume, nämlich einen deckelseitigen Arbeitsraum 3a und einen bodenseitigen Arbeitsraum 3b unterteilt. Die Arbeitsräume 3a, 3b sind bekanntermassen mit Öl gefüllt und stehen über ein im Boden des Arbeitszylinders 3 angeordnetes Bodenventil 4 bzw. über Durchlässe 5 im Bereich eines gleichzeitig als Kolbenstangenführung wirkende Deckels 6 mit einem Ausgleichsraum 7 in Verbindung.

Der Ausgleichsraum 7 ist koaxial um den Arbeitszylinder 3 angeordnet und ist nach aussen durch ein Mantelrohr 8 mit einem Boden 9 begrenzt. Der Ausgleichsraum 7 umfasst einen unteren Ölbereich 7a und einen oberen Gasbereich 7b. Die Funktionsweise des dargestellten Schwingungsdämpfers beim Dämpfen von Stössen entspricht grundsätzlich der dem Fachmann geläufigen Funktionsweise und braucht daher hier nicht wiederholt zu werden.

Der Arbeitszylinder 3 ist bodenseitig im Bereich des Bodens 9 des Mantelrohrs 8 abgestützt und mit diesem fest verbunden. Deckelseitig ist der Arbeitszylinder 3 gegenüber dem Mantelrohr 8 mit axialer Verschieblichkeit radial kraftschlüssig fixiert und weist dort eine Abdichteinrichtung 10 gegenüber dem Mantelroht 8 auf.

Im einzelnen dient eine ohnehin vorhandene Bodenventilschraube 11 gleichzeitig zum bodenseitigen Befestigen des Arbeitszylinders 3 am Boden 9 des Mantelrohrs 8. Bei der Ausführungsform nach Fig. 1 ist der Boden des Arbeitszylinders 3 mit axialem Abstand vom Boden 9 des Mantelrohrs 8 angeordnet, und die axiale Abstützung zwischen Arbeitszylinder 3 und Mantelrohr 8 erfolgt über die äussere Stirnfläche 11a der Bodenventilschraube 11.

Bei der Ausführungsform nach Fig. 2, welche im übrigen der Ausbildung nach Fig. 1 entspricht, ist gemäss einer Abwandlung der Boden des Arbeitszylinders 3' unter Zwischenschaltung einer Scheibe 12 aus Stahl am Boden 9' des Mantelrohrs 8' angeordnet, wobei der Boden 9' Durchströmungskanäle 13 zum Ausgleichsraum 7' aufweist.

Die radiale kraftschlüssige Fixierung des Arbeitszylinders 3 innerhalb des Mantelrohrs 8 erfolgt mittels eines innenspannenden Ringes 14, welcher mit Presssitz im Mantelrohr 8 angeordnet ist. Die Abdichteinrichtung 10 ist zweckmässigerweise durch einen Gummiring oder dergleichen gebildet, welcher zwischen dem innenspannenden Ring 14 und einer Scheibe 15 angeordnet ist.

Bei der in Fig. 3 dargestellten Abwandlung der deckelseitigen Montage des Arbeitszylinders 3'' innerhalb des Mantelrohrs 8'' ist dessen äusseres Ende um den innenspannenden Ring 14' herumgebördelt.

Bei der in Fig. 4 dargestellten nochmals weiteren Abwandlung der Montage des Arbeitszylinders 3''' innerhalb des Mantelrohrs 8''' ist der innenspannende Ring 14'' zusätzlich durch einen Sprengring 16 fixiert.

Bei dem erfindungsgemässen ölgefüllten Zweirohr-Teleskopschwingungsdämpfer bilden also wie ersichtliche Arbeitszylinder 3 bzw. 3', ..., Bodenventil 4 bzw. 4', ... und Deckel 6 eine Einheit, die als solche auf die beschriebene erfindungsgemässe Weise innerhalb des Mantelrohrs 8 bzw. 8', ... montiert ist.

Wie bereits weiter oben eingehend erläutert, wird es durch die Wirkungsweise der Erfindung ermöglicht, dass einerseits vor allem der Arbeitszylinder 3 bzw. 3', ... wie bisher aus Stahl besteht, andererseits jedoch vor allem das Mantelrohr 8 bzw. 8', ... aus einem Leichtbaustoff, insbesondere einem Kunststoff oder einer Aluminium-Legierung, besteht, wobei im Boden 9 bzw. 9' des Mantelrohrs 8 bzw. 8' ein Befestigungsauge 17 bzw. 17' aus Stahl zur Aufnahme der Bodenventilschraube 11 bzw. 11' eingeformt ist.

Die Erfindung ermöglicht somit mit den beschriebenen einfachen Mitteln eine problemlose Paarung von Leichtbaustoffen und Schwerbau-

stoffen beim Bau von ölgefüllten Zweirohr-Teleskopschwingungsdämpfern und somit eine beträchtliche Reduzierung von deren Gesamtgewicht.

## Patentansprüche

1. Ölgefüllter Zweirohr-Teleskopschwingungsdämpfer, insbesondere für Kraftfahrzeuge, bei welchem ein an einer Kolbenstange befestigter ventilbestücker Kolben einen Arbeitszylinder in zwei Arbeitsräume unterteilt, welche über ein im Boden des Arbeitszylinders angeordnetes Bodenventil bzw. über Durchlässe im Bereich eines Dekkels mit einem koaxial um den Arbeitszylinder angeordneten Ausgleichraum in Verbindung stehen, der nach aussen durch ein Mantelrohr mit einem Boden begrenzt ist, wobei der Arbeitszylinder bodenseitig im Bereich des Bodens des Mantelrohrs abgestützt ist und wobei der Arbeitszylinder deckelseitig axial verschieblich und abgedichtet angeordnet ist, derart, dass unterschiedliche Ausdehnungen von Arbeitszylinder und Mantelrohr möglich sind, dadurch gekennzeichnet, dass der Arbeitszylinder (3, 3', 3'', 3''') bodenseitig mit dem Mantelrohr (8, 8', 8'', 8''') im Bereich von dessen Boden (9, 9') fest verbunden ist und dekkelseitig gegenüber dem Mantelrohr (8, 8', 8'', 8''') mittels eines radial wirkenden Spannringes (14, 14', 14'') kraftschlüssig fixiert ist, der zwischen Arbeitszylinder (3, 3', 3'', 3''') und Mantelrohr (8, 8', 8'', 8''') angeordnet ist und welchem innerhalb des Ausgleichsraums (7, 7') eine Abdichteinrichtung (10, 10', 10'') zugeordnet ist.

2. Schwingungsdämpfer nach Anspruch 1, dadurch gekennzeichnet, dass eine Bodenventilschraube (11, 11') gleichzeitig zum bodenseitigen Befestigen des Arbeitszylinders (3, 3') am Boden (9, 9') des Mantelrohrs (8, 8') dient.

3. Schwingungsdämpfer nach Anspruch 2, dadurch gekennzeichnet, dass der Boden des Arbeitszylinders (3) mit axialem Abstand vom Boden (9) des Mantelrohrs (8) angeordnet ist und die axiale Abstützung zwischen Arbeitszylinder (3) und Mantelrohr (8) über die äussere Stirnfläche (11a) der Bodenventilschraube (11) erfolgt.

4. Schwingungsdämpfer nach Anspruch 2, dadurch gekennzeichnet, dass der Boden des Arbeitszylinders (3') unter Zwischenschaltung einer Scheibe (12) am Durchströmungskanal (13) zum Ausgleichsraum (7') aufweisenden Boden (9') des Mantelrohrs (8') abgestützt ist.

5. Schwingungsdämpfer nach einem der Ansprüche 1–4, dadurch gekennzeichnet, dass die radiale kraftschlüssige Fixierung des Arbeitszylinders (3, 3'', 3''') innerhalb des Mantelrohrs (8, 8'', 8''') mittels eines vorzugsweise innenspannenden Ringes (14, 14', 14'') erfolgt, welcher mit Presssitz im Mantelrohr (8, 8'', 8''') angeordnet ist.

6. Schwingungsdämpfer nach einem der Ansprüche 1–5, dadurch gekennzeichnet, dass die Abdichteinrichtung (10) durch einen Gummiring oder dergleichen gebildet ist, welcher zwischen dem vorzugsweise innenspannenden Ring (14, 14', 14'') und einer bezüglich dieses in Richtung auf den Boden des Arbeitszylinders (3, 3'', 3''') befindlichen Scheibe (15, 15', 15'') angeordnet ist.

7. Schwingungsdämpfer nach Anspruch 5 oder 6, dadurch gekennzeichnet, dass der innenspannende Ring (14'') zusätzlich durch einen Sprengring (16) fixiert ist.

8. Schwingungsdämpfer nach einem der Ansprüche 1–7, dadurch gekennzeichnet, dass das Mantelrohr (8, 8', 8''') aus einem Leichtbaustoff, insbesondere Kunststoff oder Aluminium-Legierung, besteht, wobei im Boden des Mantelrohrs (8, 8') gegebenenfalls ein metallisches Befestigungsauge (17, 17') zur Aufnahme der Bodenventilschraube (11, 11') vorgesehen ist.

## Claims

1. Oil-filled double tube telescopic shock absorber, especially for motor vehicles, in which a piston secured to a piston rod and provided with a valve divides a working cylinder into two working chambers which are in communication with a reservoir chamber arranged co-axially around the working cylinder, through a base-end valve disposed in the base-end of the working cylinder and/or through openings in the region of a cover, the outer wall of the reservoir chamber being formed by an outer tube having a base, the working cylinder being supported at its base-end in the region of the base of the outer tube, and the cap end of the working cylinder being arranged to be axially displaceable and sealed in such a way as to allow different degrees of expansion of the working cylinder and of the outer tube, characterised in that the working cylinder (3, 3', 3'', 3''') is rigidly connected at its base-end to the outer tube (8, 8', 8'', 8''') in the region of the base (9, 9') of the latter and at its cap end it is secured mechanically with respect to the outer tube (8, 8', 8'', 8''') by means of a radially acting spring ring (14, 14', 14'') arranged between the working (3, 3', 3'', 3''') and the outer tube (8, 8', 8'', 8''') and with which is associated a sealing device (10, 10', 10'') within the reservoir chamber (7, 7').

2. Shock absorber according to claim 1, characterised in that a screw (11, 11') forming part of the base-end valve serves simultaneously for securing the base-end of the working cylinder (3, 3') to the base (9, 9') of the outer tube (8, 8').

3. Shock absorber according to claim 2, characterised in that the base-end of the working cylinder (3) is arranged axially spaced away from the base (9) of the outer tube (8) and the axial support between the working cylinder (3) and the outer tube (8) is achieved by the tip (11a) of the screw (11) of the base-end valve.

4. Shock absorber according to claim 2, characterised in that the base-end of the working cylinder (3') is supported on the base (9') of the outer tube (8'), which has flow passages (13) leading to the reservoir chamber (7'), with the interposition of a washer (12).

5. Shock absorber according to one of claims 1 to 4, characterised in that the radial mechanical connection of the working cylinder (3, 3'', 3''') is arranged within the outer tube (8, 8″, 8‴) by means of a ring (14, 14′, 14″) which is preferably inwardly stressed and which is mounted as a press-in fit in the outer tube (8, 8″, 8‴).

6. Shock absorber according to one of claims 1 to 5, characterised in that the sealing device (10) is formed by a rubber ring or the like, which is arranged between the ring (14, 14′, 14″) which is preferably stressed inwards, and a washer (15, 15′, 15″) which is present preferably, with reference to the latter, on that side of it which is towards the base-end of the working cylinder (3, 3″, 3‴).

7. Shock absorber according to claim 5 or 6, characterised in that the inwardly stressed ring (14″) is further located by a spring ring (16).

8. Shock absorber according to one of claims 1 to 7, characterised in that the outer tube (8, 8′, 8″) is made of a light material, in particular plastics or aluminium alloy, a metallic securing eye or bush (17, 17′) being provided if necessary in the base of the outer tube (8, 8′) for receiving the screw (11, 11′) associated the base-end valve.

**Revendications**

1. Amortisseur télescopique à tube double rempli d'huile, en particulier pour véhicules, dans lequel un piston, fixé à une tige de piston et équipé d'une soupape, partage un cylindre de travail en deux volumes de travail, qui sont en liaison, par l'intermédiaire d'une soupape de fond disposée au fond du cylindre de travail et par l'intermédiaire de passages au voisinage d'un couvercle, avec un volume d'équilibrage disposé coaxialement autour du cylindre de travail et limité vers l'extérieur par un tube périphérique comportant un fond, le cylindre le travail s'appuyant, du côté de son fond, au voisinage du fond du tube périphérique et le cylindre de travail étant disposé, du côté de son couvercle, avec possibilité de coulissement axial et avec étanchéité, de telle façon que des dilatations différentes du cylindre de travail et du tube périphérique sont possibles, caractérisé en ce que le cylindre de travail (3, 3′, 3″, 3‴), du côté de son fond, est solidarisé avec le tube périphérique (8, 8′, 8″, 8‴) au voisinage du fond de ce tube (9, 9′) et, du côté de son couvercle, est fixé positivement par rapport au tube périphérique (8, 8′, 8″, 8‴) au moyen d'une bague de serrage à action radiale (14, 14′, 14″), disposée entre le cylindre de travail (3, 3′, 3″, 3‴) et le tube périphérique (8, 8′, 8″, 8‴) et à laquelle correspond à l'intérieur du volume d'équilibrage (7, 7′) un dispositif d'étanchéité (10, 10′, 10″).

2. Amortisseur selon la revendication 1, caractérisé en ce qu'une vis de soupape de fond (11, 11′) sert simultanément à fixer, du côté de son fond, le cylindre de travail (3,3′) au fond (9, 9′) du tube périphérique (8, 8′).

3. Amortisseur selon la revendication 2, caractérisé en ce que le fond du cylindre de travail (3) est disposé à une certaine distance axiale du fond (9) du tube périphérique (8); et en ce que l'appui axial entre le cylindre de travail (3) et le tube périphérique (8) se fait par l'intermédiaire de la surface frontale externe (11a) de la vis de soupape de fond (11).

4. Amortisseur selon la revendication 2, caractérisé en ce que le fond du cylindre de travail (3′) s'appuie, avec interposition d'une rondelle (12), contre le fond (9′), qui présente un canal d'écoulement (13) en direction du volume d'équilibrage (7′), du cylindre périphérique (8′).

5. Amortisseur selon l'une quelconque des revendications 1–4, caractérisé en ce que la fixation positive radiale du cylindre de travail (3, 3″, 3‴) à l'intérieur du tube périphérique (8, 8″, 8‴) se fait au moyen d'une bague (14, 14′, 14″), de préférence à serrage interne, disposée dans le tube périphérique (8, 8″, 8‴) avec ajustement serré.

6. Amortisseur selon l'une quelconque des revendications 1–5, caractérisé en ce que le dispositif d'étanchéité (10) est constitué d'une bague de caoutchouc ou autre semblable, disposée entre la bague (14, 14′, 14″), de préférence à serrage interne, et une rondelle (15, 15′, 15″ qui se trouve, par rapport a cette bague, dans la direction du fond du cylindre der travail (3′, 3″, 3‴).

7. Amortisseur selon la revendication 5 ou la revendication 6, caractérisé en ce que la bague à serrage interne (14″) est de plus fixée par un circlips (16).

8. Amortisseur selon l'une quelconque des revendications 1–7, caractérisé en ce que le tube périphérique (8, 8′, 8″) est constitué d'un matériau léger, en particulier plastique ou d'un alliage d'aluminium, une douille métallique de fixation (17, 17′) étant éventuellement prévue dans le fond du tube périphérique (8, 8′) pour recevoir la vis de soupape de fond (11, 11′).

0 027 163

1/2

Fig. 3

Fig. 4

Fig. 1

Fig. 2